# EUROPÄISCHE PATENTSCHRIFT

(11) **EP 2 657 586 B1**
(45) Veröffentlichungstag und Bekanntmachung des Hinweises auf die Patenterteilung: **05.12.2018**
(21) Anmeldenummer: 13001962.3
(22) Anmeldetag: 15.04.2013
(51) Int. Cl.: F16L 55/11, F16L 55/115

(54) **Verschlusselement für ein hydraulisches Anschlusssystem**
Closure element for a hydraulic connection system
Elément de fermeture pour un système de raccordement hydraulique

(30) Priorität: 25.04.2012 DE 102012206765
(43) Veröffentlichungstag der Anmeldung: 30.10.2013
(73) Patentinhaber: Schaeffler Technologies AG & Co. KG, 91074 Herzogenaurach (DE)
(72) Erfinder: Heitbaum, Markus, 77830 Bühlertal (DE)

(56) Entgegenhaltungen:
- DE-A1- 19 813 931
- US-A- 4 046 168
- US-A- 5 224 515

## Beschreibung

Die Erfindung betrifft ein Verschlusselement für ein hydraulisches Anschlusssystem, insbesondere für standardisierte Male- und Female-Anschlüsse bei Druckleitungen, hydraulischen Kupplungsnehmern und -gebern sowie bei Momentenspitzenbegrenzern (PTL = Peak Torque Limiter) und dergleichen.

Aus dem Stand der Technik ist ein Verschlussstopfen bekannt, welcher in einen Female-Anschluss eingeführt werden kann und diesen dadurch abdichtet. Nachteilig ist bei diesem Verschlussstopfen, dass es unterschiedliche Standardlängen gibt und dieser Verschlussstopfen nur für eine bestimmte Standardlänge einsetzbar ist. Es ist auch bekannt, diesen Verschlussstopfen derart auszubilden, dass er zugleich als Verschlusskappe für einen Male-Anschluss verwendet werden kann. Dieser ist dabei derart eingerichtet, dass er das vorhandene Dichtelement des Male-Anschlusses zur Dichtung verwendet.

Weiterhin offenbart die Druckschrift DE 198 13 931 A1 ein Verschlusselement gemäß de: Oberbegriffs des unabhängigen Patentanspruchs 1. Die Druckschrift US 5,224,515 A zeigt einen Verschlussstopfen mit Wülsten, die an dessen Innenseite angebracht sind, und mit dem zu verbindenden Rohr in Verbindung stehen. Die Druckschrift US 4,046,168 A beschreibt ebenso einen Verschlussstopfen für einen Schlauch mit einem im Inneren vorstehenden Zapfen.

Hiervon ausgehend liegt der vorliegenden Erfindung die Aufgabe zugrunde, die aus dem Stand der Technik bekannten Nachteile zumindest teilweise zu überwinden. Die Aufgabe wird durch die Merkmale des unabhängigen Patentanspruchs gelöst. Vorteilhafte Weiterbildungen sind Gegenstand der abhängigen Patentansprüche.

Die Erfindung betrifft ein Verschlusselement für ein hydraulisches Anschlusssystem, wobei das Verschlusselement eine Außenfläche und eine Innenfläche aufweist und wobei das Verschlusselement sowohl außenseitig als Stopfen für eine Dosenöffnung verwendbar ist als auch innenseitig als Kappe mit einer Aufnahmeöffnung für ein Steckelement verwendbar ist, wobei das Steckelement mit der Dosenöffnung hydraulisch leitend verbindbar ist, und wobei eine Dosenöffnung mittels einer Dichtlippe abdichtbar ist, wobei die Dichtlippe in einem ersten Außenabschnitt der Außenfläche angeordnet ist und relativ zum ersten Außenabschnitt unter einem Winkel weg gerichtet ist. Die Außenfläche weist einen sich an den ersten Außenabschnitt anschließenden konzentrischen dritten Außenabschnitt auf, wobei der erste Außenabschnitt sich zum dritten Außenabschnitt hin erweitert und die Dichtlippe sich in Verlängerung des dritten Außenabschnitts zum ersten Außenabschnitt hin konzentrisch, insbesondere parallel, erstreckt.

Das Verschlusselement ist sowohl als Stopfen als auch als Kappe verwendbar. In der Verwendung als Stopfen wird das Verschlusselement mit einem Teil der Außenfläche mit der jeweiligen Dosenöffnung derart in Kontakt gebracht, dass diese hydraulisch geschlossen ist. Die Dosenöffnung ist dabei eine Öffnung, die einen, vorzugsweise genormten, Female-Anschluss eines hydraulischen Anschlusssystems darstellt. Zu dieser Dosenöffnung existiert ein korrespondierendes Steckelement, welches passend in die Dosenöffnung einführbar ist, als entsprechender, vorzugsweise genormter, Male-Anschluss, und somit zum Beispiel zwei Schläuche hydraulisch leitend miteinander verbunden werden können. Eine hydraulisch leitende Verbindung stellt in diesem Zusammenhang eine Verbindung eines Leitungssystems für ein Fluid dar, bei dem die Dosenöffnung und das Steckelement derart miteinander verbunden sind, dass ein Fluid, insbesondere unter hohem Druck, durch miteinander über die Dosenöffnung und das Steckelement verbundene Leitungen in einer Leitungsrichtung strömen kann, ohne dabei im Bereich der Dosenöffnung und des Steckelements in die Umgebung austreten zu können. Dazu weist das Steckelement im Anschlussbereich ein Dichtelement, zum Beispiel einen Dichtring aus einem Elastomer, auf. Das Steckelement weist weiterhin eine zentrale Leitungsöffnung auf, durch die ein Fluid in die Dosenöffnung oder aus der Dosenöffnung herausgeleitet werden kann.

Weiterhin weist die Dosenöffnung in der Regel ein Federelement und das Steckelement eine korrespondierende Nut auf, wobei über das Federelement das Steckelement mit der korrespondierenden Nut axial gesichert wird. Insbesondere kann das Steckelement durch einfaches Einstecken und Einrasten in der Dosenöffnung hydraulisch leitend mit diesem verbunden werden. Sowohl die Dosenöffnung als auch das Steckelement sind in der Regel aus einem Metall gefertigt. Die Nut des Steckelements ist dabei in einem Einrastbereich vorgesehen und in einem im Vergleich zum Einrastbereich verjüngten Dichtbereich ist das Dichtelement ausgebildet, der von der Eintrittsöffnung der Leitungsöffnung des Steckelements gesehen vorne angeordnet ist. Die Dosenöffnung weist entsprechend (vorne) einen Einrastbereich mit einem Federelement auf und einen im Vergleich dazu verjüngten Aufnahmebereich (hinten) für den Dichtbereich des Steckelements. Im Stand der Technik weist der Verschlussstopfen an der Spitze eine konische Fläche auf, die dazu eingerichtet ist, an dem konischen Übergang von dem Einrastbereich zum Aufnahmebereich der Dosenöffnung anzuliegen und damit die Dosenöffnung abzudichten. Um dem Verschlussstopfen des Stands der Technik wieder aus der Dosenöffnung entfernen zu können, ist ein Rand vorgesehen, der eine maximale Einstecktiefe des Verschlussstopfens des Stands der Technik in eine Dosenöffnung begrenzt. Daher müssen für verschiedene Dosenöffnungen mit verschieden langen Einrastbereichen verschieden lange Verschlussstopfen verwendet werden. Das hier vorgeschlagene Verschlusselement weist an der Außenfläche einen ersten Außenabschnitt auf, in welchem eine Dichtlippe angeordnet ist. Diese Dichtlippe ist unter einem Winkel von dem ersten Außenabschnitt weg gerichtet. In einer bevorzugten Ausführungsform liegt der Winkel bei 90° zum erste Außenabschnitt und/oder ist in etwa senkrecht nach außen zur Innenwand der Dosenöffnung gerichtet. Insbesondere ist die Dichtlippe derart eingerichtet, dass sie im ersten Außenabschnitt die einzige Kontaktfläche mit der Dosenöffnung bildet. Mit dieser Konstruktion ist es möglich, eine Dosenöffnung mittels des Verschlusselements in Verwendung als Stopfen für jegliche Längen der Dosenöffnung zu verwenden. Zugleich ist das erfindungsgemäße Verschlusselement als Kappe für ein korrespondierendes Steckelement verwendbar. Dazu bildet es mit einem Teil der Innenfläche innenseitig eine Aufnahmeöffnung, in die das Steckelement, vorzugsweise mit dem Dichtungsbereich, mit dem Dichtelement in das Verschlusselement einführbar ist. Vorteilhaft ist hierbei, dass das Verschlusselement gleichzeitig zum Verschließen der Dosenöffnung und zum Verschließen des Steckelements verwendet werden kann, sodass zwar das Steckelement nicht vollständig in der Dosenöffnung versenkbar ist, aber zum Beispiel in einer Vormontage bereits eindeutig in die richtige Position gebracht und dort gehalten werden kann.

Das Verschlusselement ist vorzugsweise aus einem (einzigen) Material und einstückig ausgebildet. Ganz besonders bevorzugt ist das Verschlusselement aus einem Kunststoff geformt, insbesondere durch Spritzguss. Das Material ist dabei bevorzugt aus einem Elastomer gewählt, sodass es zumindest im Bereich der Dichtlippe Eigenschaften aufweist, die zum Abdichten einer Dosenöffnung und/oder eines Steckelements, welche bevorzugt aus einem Metall gefertigt sind, geeignet ist.

In einer weiteren vorteilhaften Ausführungsform weist das Verschlusselement einen zweiten Außenabschnitt auf, mit welchem die Dosenöffnung gegen Verschmutzen schützbar ist, und der zweite Außenabschnitt bevorzugt konzentrisch radial nach außen versetzt ist und über die Außenfläche anlegbar ist.

Mit dem Verschlussstopfen des Stands der Technik konnte bisher nicht zugleich ein Schutz gegen Verschmutzen bereitgestellt werden. Der Rand des Verschlussstopfens, welcher hauptsächlich zum wieder Entfernen des Verschlussstopfens eingerichtet ist, konnte nicht zum Anliegen an der Dosenöffnung beziehungsweise dem Steckelement gebracht werden, weil sonst eine Doppelpassung aufgetreten wäre und die Dichtwirkung gefährdet gewesen wäre. Insbesondere bei einer Langzeitverwendung des aus dem Stand der Technik bekannten Verschlussstopfens konnte daher die Dosenöffnung verschmutzen und damit sogar die Dichtwirkung des Verschlusselements gefährdet werden. Insbesondere wurde der Schmutz beim Entfernen des Verschlussstopfens nicht wieder herausgeführt und somit in das hydraulische Anschlusssystem eingebracht. Dies wiederum kann zu Beschädigungen und Beeinträchtigungen des hydraulischen Anschlusssystems und/oder sogar des gesamten hydraulischen Systems führen, welches unter Umständen empfindliche Ventile, Druckmessinstrumente und dergleichen aufweist. Aufgrund der Verwendung einer Dichtlippe, welche unter einen Winkel vom ersten Außenabschnitt des Verschlusselements weggerichtet ist und sich daher an die Dosenöffnung anlegen kann, ohne zu einer Verformung des übrigen Verschlusselements zu führen, ist es nun erstmals möglich, einen zweiten Außenabschnitt vorzusehen, welcher durch Anliegen an der Dosenöffnung die Dosenöffnung vor Verschmutzten schützt. Insbesondere kann keine Doppelpassung auftreten. Besonders bevorzugt ist der zweite Außenabschnitt konzentrisch radial nach außen versetzt, sodass das Verschlusselement mit der Außenfläche im zweiten Außenabschnitt im eingesteckten Zustand an der Dosenöffnung anliegt. Ganz besonders bevorzugt ist dieser zweite Außenabschnitt in einem Bereich des Verschlusselements angeordnet, der beim eingesteckten Zustand in der Dosenöffnung vor dem Federelement im Einrastbereich angeordnet ist. Der erste Außenabschnitt ist dabei in Einsteckrichtung vorne am Verschlusselement angeordnet und der zweite Außenabschnitt hinten.

In einer weiteren vorteilhaften Ausführungsform des Verschlusselements weist die Dichtlippe einen ersten Außendurchmesser und der zweite Außenabschnitt einen zweiten Außendurchmesser auf, wobei der erste Außendurchmesser kleiner als der zweite Außendurchmesser ist.

Die Dichtlippe liegt mit dem ersten Außendurchmesser im eingesteckten Zustand an der Dosenöffnung an. Der zweite Außendurchmesser des zweiten Außenabschnitts liegt zum Schutz gegen Verschmutzen ebenfalls an der Dosenöffnung im eingesteckten Zustand an. Wie bereits oben erwähnt, weist die Dosenöffnung ein Federelement auf, welches im Einrastbereich der Dosenöffnung in den Innendurchmesser der Dosenöffnung hineinragt. Das Federelement ist dabei in der Regel als Ring aus Federstahl gebildet, welcher an einer oder mehreren Stellen mit einem oder mehreren Knicken in den Einrastbereich der Dosenöffnung hineinragt, sodass das Steckelement mit der entsprechenden Nut in der Dosenöffnung eingerastet werden kann. Daher liegt in dem Einrastbereich der Dosenöffnung ein unsymmetrischer Querschnitt vor, welcher vom Verschlusselement zumindest teilweise durchschritten werden muss. Es ist daher vorteilhaft, zu verhindern, dass die Dichtlippe beim Einführen des Verschlusselements in die Dosenöffnung mit dem Federelement der Dosenöffnung in Kontakt kommt beziehungsweise beim Einschieben des Verschlusselements auf die Dichtlippe eine zu große Kraft durch das Federelement auf die Dichtlippe ausgeübt wird. Daher wird hier die Lösung vorgeschlagen, die Dichtlippe derart einzurichten, dass sie in dem Bereich der gegenüber dem Einrastbereich verjüngt ist, in der Dosenöffnung zum Anliegen kommt und einen ersten Außendurchmesser aufweist, der geringer ist als der zweite Außendurchmesser des zweiten Außenabschnitts, welcher dazu eingerichtet ist, im Einrastbereich der Dosenöffnung anzuliegen. Das bedeutet insbesondere, dass der erste Außendurchmesser der Dichtlippe kleiner ist als ein minimaler (konzentrischer) Innendurchmesser der Dosenöffnung im Einrastbereich. Der zweite Außendurchmesser dagegen entspricht exakt dem Innendurchmesser im Einrastbereich der Dosenöffnung oder weist demgegenüber ein geringes Aufmaß zur Erzeugung einer Presspassung auf und ist nicht über das Federelement hinaus in die Dosenöffnung hineinschiebbar. Hierdurch kann auch verhindert werden, dass das Verschlusselement zu tief in die Dosenöffnung eingeschoben wird und nur umständlich oder zerstörend wieder entfernt werden könnte.

Vorteilhafter Weise ist zum Einführen des Verschlusselements in die Dosenöffnung der erste Außenabschnitt konisch geformt, sodass er eine Fase aufweist, die das Einführen des Verschlusselements in eine Dosenöffnung erleichtert. An den ersten Außenabschnitt anschließend ist ein konzentrischer dritter Außenabschnitt vorgesehen, welcher vorzugsweise zylindrisch und konzentrisch zur Dosenöffnung ausgerichtet ist. Die Dichtlippe, welche im ersten Außenabschnitt angeordnet ist, ist hierbei konzentrisch und in Verlängerung zum dritten Abschnitt ausgerichtet. Bevorzugt ist der dritte Außenabschnitt mit einem geringeren Außendurchmesser versehen als der zweite Außenabschnitt. Ganz besonders bevorzugt ist der Außendurchmesser des dritten Außenabschnitts kleiner als der minimale Innendurchmesser der Dosenöffnung im Einrastbereich. Die Dichtlippe, die im Wesentlichen in Einsteckrichtung nach vorne gerichtet ist, ist dazu eingerichtet, in dem Übergangsbereich von dem Einrastbereich in der Dosenöffnung zu dem Aufnahmebereich der Dosenöffnung, welcher sich verjüngt, anzuliegen. Hierzu kann die Dichtlippe insbesondere ein wenig nach innen geneigt sein, sodass die Dichtlippe beim Einführen in die Dosenöffnung nach innen gedrückt wird und nicht die Gefahr besteht, dass die Dichtlippe verkantet und/oder nicht richtig abdichtet. Bevorzugt ist die Dichtlippe unter 2° bis 10°, bevorzugt unter 5°, in Bezug auf die zylindrische dritte Außenfläche des dritten Außenabschnitts nach innen geneigt. Der erste Außenabschnitt ist demgegenüber bevorzugt um mindestens 10°, bevorzugt um 30° bis 45°, nach innen geneigt.

In einer weiteren vorteilhaften Ausführungsform bildet das Verschlusselement einen konzentrischen Zapfen aus, welcher in eine Leitungsöffnung eines Steckelements derart einsteckbar ist, dass diese abgedichtet ist.

Im Stand der Technik wurde das vorhandene Dichtelement des Steckelements im Dichtbereich zum Abdichten verwendet. Dieses Dichtelement, welches in der Regel aus einem Elastomer gebildet ist, ist aber dazu eingerichtet, eine metallische Fläche mit einer genormten Oberflächenrauigkeit abzudichten. Insbesondere bei der Verwendung eines Verschlusselements aus einem Kunststoff, welcher ebenfalls zum Abdichten geeignet ist, kann es beim Aufschieben des Verschlusselements über das Dichtelement des Steckelements zu Beschädigungen an dem Dichtelement und/oder dem Steckelement kommen. Um diesen Nachteil zu überwinden, ist im dem Verschlusselement ein konzentrischer Zapfen ausgebildet, welcher in die zentrale Öffnung, die Leitungsöffnung, des Steckelements eingeführt werden kann. Dadurch wird das Steckelement abgedichtet. Ein weiterer Vorteil dieser Konstruktion des Verschlusselements ist, dass das Verschlusselement kein Reservoir bildet, in welchem sich das zu leitende Fluid sammeln kann. Darüber hinaus kann der Zapfen derart ausgebildet sein, dass er aus der Aufnahmeöffnung des Verschlusselements hinausragt, und darüber aus einer Dosenöffnung herausgezogen werden kann. Damit wird ein gewinkelter Rand zum Herausnehmen des Verschlusselements überflüssig und das Verschlusselement kann in verschieden tiefe Dosenöffnungen eingeführt werden, weil kein Anschlag mit der Dosenöffnung gebildet ist. Weiterhin kann der Zapfen auch über den ersten Außenabschnitt des Verschlusselements außenseitig hinausragen, sodass das Verschlusselement von dem Steckelement abgezogen werden kann, ohne das Verschlusselement an das Steckelement anzudrücken. Für diesen Zweck können die jeweiligen Zapfenenden rau und/oder geriffelt ausgeführt sein, sodass das Verschlusselement aus der Dosenöffnung oder dem Steckelement leicht von Hand entfernt werden kann.

In einer weiteren vorteilhaften Ausführungsform bildet das Verschlusselement an der Aufnahmeöffnung einen Randabschnitt aus, mit welchem ein aufgenommener Bereich eines Steckelements gegen Verschmutzen schützbar ist, wobei der Randabschnitt derart eingerichtet ist, dass der Randabschnitt sich zur Aufnahmeöffnung hin radial nach außen erweitert und über die Innenfläche an dem Steckelement anlegbar ist.

Auch für das Steckelement ist es von Vorteil, dieses beziehungsweise die Dichtlippe des Verschlusselements vor Verschmutzen zu schützen. Hierzu eignet sich insbesondere die Erweiterung des Steckelements vom Dichtbereich zum Einrastbereich als Anlagefläche für den Randabschnitt der Aufnahmeöffnung des Verschlusselements. Dabei erweitert sich der Randabschnitt zur Aufnahmeöffnung hin radial nach außen, sodass das Verschlusselement zum einen leicht auf das Steckelement aufführbar ist und zum anderen bei einer ausreichend elastischen Ausgestaltung des Verschlusselements beziehungsweise des Randabschnitts keine Doppelpassung entstehen kann. Vielmehr wird der Randabschnitt bis zur Anlage der Dichtfläche des Verschlusselements an dem Steckelement gegebenenfalls nach außen gedehnt.

In einer weiteren vorteilhaften Ausführungsform des Verschlusselements bildet die Innenfläche allein mit dem Randabschnitt und/oder dem Zapfen eine Kontaktfläche für ein Steckelement und insbesondere die übrige Innenfläche bei einem Aufschieben zu keinem Zeitpunkt Kontakt mit dem Steckelement hat.

Wie bereits oben erwähnt, kann durch die Materialwahl des Verschlusselements das Aufschieben auf das Steckelement an dessen Dichtelement, zum Beispiel einen Dichtring, zu Beschädigungen des Dichtelements führen. Daher ist es vorteilhaft, den Innendurchmesser des Verschlusselements derart zu wählen, dass das Dichtelement nicht berührt werden muss. Dabei kann der Zapfen wiederum als Führungselement dienen, so dass das Verschlusselement bereits vor dem Aufschieben der Innenfläche des Verschlusselements auf das Steckelement relativ zum Steckelement über die Leitungsöffnung des Steckelements zu diesem zentriert ist. In dieser Ausführungsform ist dabei vorteilhafter Weise die Innenfläche in dem Aufnahmebereich für das Steckelement mit einem Innendurchmesser ausgeführt, der größer ist als ein maximaler Außendurchmesser des Dichtbereichs des Steckelements. Erst der Randabschnitt kommt mit der Erweiterung des Steckelements im Übergang von dem Dichtbereich zum Einrastbereich zum Anliegen an dem Steckelement.

In einer weiteren vorteilhaften Ausführungsform ist das Verschlusselement allein über die Dichtelemente in einer Dosenöffnung beziehungsweise auf einem Steckelement positionierbar.

Positionieren bedeutet hierbei insbesondere neben der Zentrierung das Sicherstellen der axialen Position des Verschlusselements in der Dosenöffnung beziehungsweise auf dem Steckelement. Über das Positionieren des Verschlusselements allein über die Dichtelemente, zum Beispiel die Dichtlippe und/oder den Zapfen, ist sichergestellt, dass keine Doppelpassung vorliegt und die Dichtelemente optimal an der Dosenöffnung beziehungsweise dem Steckelement anliegen, und diese damit abdichten. Zusätzliche Positionierungsmittel sind hierbei nicht notwendig.

Gemäß einem weiteren Aspekt der Erfindung wird auch ein hydraulisches Anschlusssystem zum leitenden Verbinden für ein Fluid vorgeschlagen, welche eine Dosenöffnung und ein leitend verbindbares Steckelement aufweist, mit einem Verschlusselement nach der vorliegenden Erfindung zum Dichten der Dosenöffnung und/oder des Steckelements, wenn die Dosenöffnung beziehungsweise das Steckelement nicht miteinander leitend verbunden sind.

Das hydraulische Anschlusssystem ist dazu eingerichtet, zwei Abschnitte eines Hydrauliksystems lösbar miteinander zu verbinden. Häufig ist es vorteilhaft, die Dosenöffnung und das verbindbare Steckelement zeitweise oder dauerhaft (gegeneinander) abzudichten. Hierzu ist das oben beschriebene Verschlusselement besonders geeignet. Hierbei kann die Dosenöffnung beziehungsweise das Steckelement nicht nur abgedichtet werden, sondern auch gegen Verschmutzen geschützt werden. Insbesondere ist ein und dasselbe Steckelement für verschiedene Dosenöffnungen und Steckelemente einsetzbar. Insbesondere kann das Verschlusselement gleichzeitig in die Dosenöffnung als Stopfen eingeführt werden und auf das Steckelement als Kappe aufgesetzt werden.

In einer weiteren vorteilhaften Ausführungsform des hydraulischen Anschlusssystems weist die Dosenöffnung einen Einrastbereich mit einem Federelement mit einem minimalen Innendurchmesser auf, wobei der Außendurchmesser der Dichtlippe kleiner ist als der minimale Durchmesser des Federelements, und wobei insbesondere das Steckelement einen Dichtbereich mit einem Dichtelement mit einem maximalen Außendurchmesser aufweist und im Verschlusselement innenseitig ein Aufnahmebereich mit einem Innendurchmesser für das Steckelement vorgesehen ist, wobei der Innendurchmesser größer als der maximale Außendurchmesser des Dichtelement ist.

Wie bereits oben beschrieben, ist es vorteilhaft, zu verhindern, dass die Dichtlippe des Verschlusselements mit dem Federelement in Kontakt kommt beziehungsweise von dem Federelement auf die Dichtlippe eine so große Kraft ausgeübt wird, dass die Dichtlippe potentiell beschädigt wird. Hierzu ist der Außendurchmesser der Dichtlippe kleiner als der minimale Durchmesser des Federelements. Vorteilhaft ist dabei weiterhin, dass der dritte Außenabschnitt des Verschlusselements ebenfalls kleiner als der minimale Durchmesser des Federelements ist, sodass das Verschlusselement leicht einschiebbar ist, keine Doppelpassung auftritt und zudem keine Deformation des Verschlusselements durch ein Anliegen des Federelements an dem dritten Außenabschnitt auftritt, welcher die Wirkung der Dichtlippe und/oder des zweiten Außenabschnitts zum Schutz gegen Verschmutzen beeinträchtigt. Insbesondere weist das hydraulische Anschlusssystem zudem ein Verschlusselement mit einem Aufnahmebereich mit einem Innendurchmesser auf, welcher größer ist als der maximale Au-ßendurchmesser des Dichtelements des Steckelements. Hierdurch wird verhindert, dass das Dichtelement beim Aufschieben des Verschlusselements auf das Steckelement beschädigt wird.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
Fig. 1: eine als bekannt angenommene Verschlusskappe auf einem Steckelement,
Fig. 2: einen als bekannt angenommenen Verschlussstopfen in einer kurzen Dosenöffnung,
Fig. 3: einen als bekannt angenommenen Verschlussstopfen in einer langen Dosenöffnung,
Fig. 4: ein Beispiel eines nicht erfindungsgemäßen Verschlusselements mit Dichtlippe,
Fig. 5: ein Beispiel des Verschlusselements gemäß Fig. 4 in einer langen Dosenöffnung,
Fig. 6: ein Beispiel des Verschlusselements gemäß Fig. 4 auf einem Steckelement,
Fig. 7: ein erfindungsgemäßes Beispiel eines Verschlusselements mit Zapfen und erweitertem Außendurchmesser,
Fig. 8: ein Beispiel des Verschlusselements gemäß Fig. 7 in einer langen Dosenöffnung,
Fig. 9: ein Beispiel des Verschlusselements gemäß Fig. 7 auf einem Steckelement, und
Fig. 10: ein Beispiel eines zusammengesteckten hydraulischen Anschlusssystems.

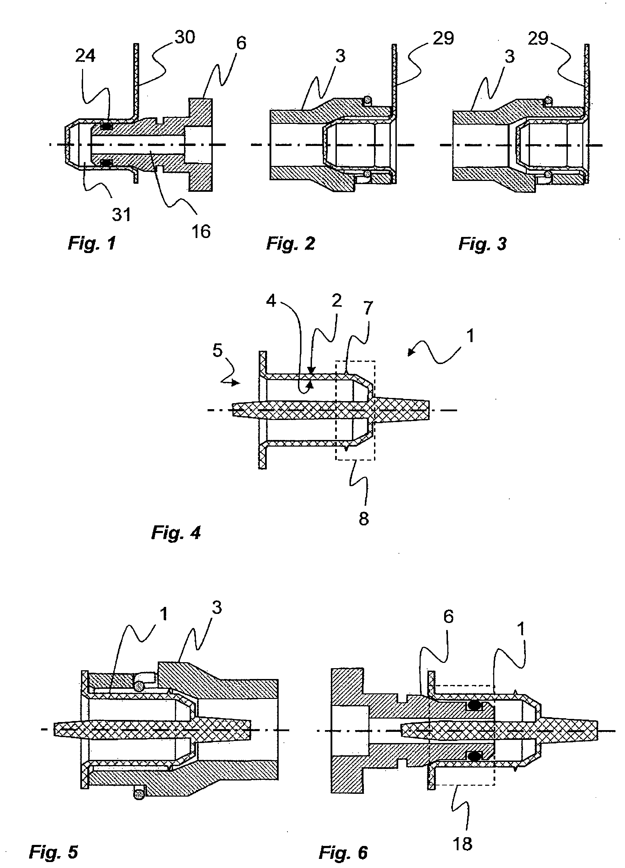

Fig. 1 zeigt eine als bekannt angenommene Verschlusskappe 30, die auf ein Steckelement 6 aufgeschoben ist. Hierbei wird das Steckelement 6 über sein Dichtelement 24 abgedichtet. Es ist zu erkennen, dass die Verschlusskappe 30 ein Reservoir 31 vor der Leitungsöffnung 16 des Steckelements 6 bildet.

Fig. 2 zeigt einen als bekannt angenommenen Verschlussstopfen 29 in einer kurzen Dosenöffnung 3. In Fig. 3 ist der gleiche Verschlussstopfen 29 in einer langen Dosenöffnung 3 gezeigt. In Fig. 3 ist eine Dichtfunktion daher nicht gegeben.

In Fig. 4 ist ein Beispiel eines nicht erfindungsgemäßen Verschlusselements 1 gezeigt, wobei an der Außenfläche 2 mittels der Dichtlippe 7 im ersten Außenabschnitt 8 ein Stopfen gebildet wird und mit der Innenfläche 4 eine Aufnahmeöffnung 5 für ein Steckelement 6 (nicht dargestellt) gebildet wird.

In den Fig. 5 und 6 ist das Verschlusselement 1 gemäß der Fig. 4 gezeigt. Der Übersichtlichkeit halber sind die in der Fig. 4 bezeichneten Komponenten des Verschlusselements 1 nicht näher bezeichnet, aber identisch. In Fig. 5 ist zu erkennen, dass mit der Dichtlippe 7 (vgl. Fig. 4) die Dosenöffnung 3 abgedichtet werden kann und dabei zugleich die Dosenöffnung 3 gegen Verschmutzen geschützt werden kann, ohne dass eine Doppelpassung vorliegt. In Fig. 6 ist gezeigt, dass das Verschlusselement 1 auch für die Verwendung als Kappe für ein Steckelement 6 geeignet ist und einen aufgenommenen Bereich 18 des Steckelements 6 umgibt.

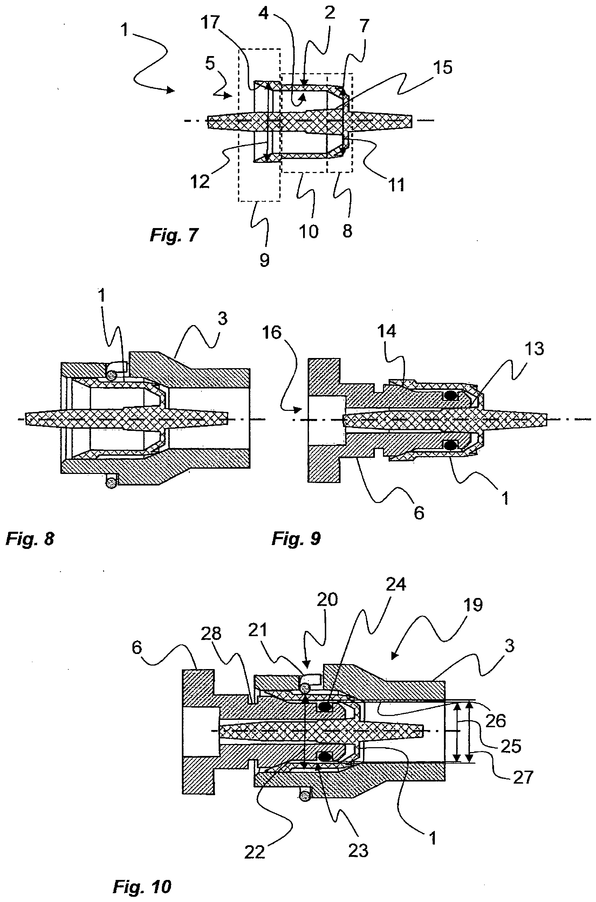

In Fig. 7 ist ein erfindungsgemäßes Beispiel des Verschlusselements 1 gezeigt, welches über einen Zapfen 15 und einen Randabschnitt 17 verfügt. Auch hier ist die Stopfeneigenschaft des Verschlusselements 1 über die Außenfläche 2 gebildet und die Kappeneigenschaft des Verschlusselements 1 über die Innenfläche 4 gebildet, die eine Aufnahmeöffnung 5 umgibt. Die Dichtlippe 7 ist im ersten Außenabschnitt 8 angeordnet und in diesem Beispiel leicht nach innen geneigt angeordnet und von der konischen Fläche des ersten Außenabschnitts 8 winklig weg gerichtet. Der erste Außendurchmesser 11 der Dichtlippe 7 im ersten Abschnitt 8 ist kleiner als der zweite Außendurchmesser 12 im zweiten Abschnitt 9. Im zweiten Abschnitt 9 ist ein Anliegen mit dem Einrastbereich 20 (vgl. Fig. 10) möglich, während die Dichtlippe 7 mit dem ersten Außendurchmesser 11 in die Dosenöffnung 3 einführbar ist, ohne mit dem Federelement 21 (vgl. Fig. 10) in Kontakt zu kommen. Der dritte Außenabschnitt 10 wird von der Dichtlippe 7 fortgesetzt und der erste Außenabschnitt 8 neigt sich um etwa 45° konisch zur Mitte. In diesem Beispiel ist der Zapfen 15 in beide Richtungen verlängert, sodass das Verschlusselement 1 leicht von Hand von dem Steckelement 6 oder der Dosenöffnung 3 abgezogen werden kann. Ebenfalls ist der konisch erweiterte Randabschnitt 17 gezeigt, der zum Schutz gegen Verschmutzen dient.

Die Figuren 8 und 9 zeigen das Verschlusselement 1 gemäß der Fig. 7, wobei hier ebenfalls der Übersichtlichkeit halber auf die Bezugszeichen für identische Komponenten des Verschlusselements 1 verzichtet wurde. Fig. 8 zeigt das Verschlusselement 1 in der Dosenöffnung 3, die hier in der langen Version gezeigt ist. Es ist zu erkennen, dass das Verschlusselement 1 leicht über den verlängerten Zapfen 15 (vgl. Fig. 7) von Hand herausgezogen werden kann. In Fig. 9 ist das Verschlusselement 1 gemäß Fig. 7 aufgeschoben auf ein Steckelement 6 gezeigt. Hierbei bilden nur der Zapfen 15 und der Randabschnitt 17 eine erste Kontaktfläche 13 und eine zweite Kontaktfläche 14. Der Zapfen 15 ist in die Leitungsöffnung 16 des Steckelements 6 eingeführt.

In der Fig. 10 ist ein hydraulisches Anschlusssystem 19 gezeigt, bei dem das Steckelement 6 wie in Fig. 9, die Dosenöffnung 3 wie in Fig. 8 und das Verschlusselement 1 wie in Fig. 7 verwendet sind und miteinander derart verbunden sind, dass sie kein Fluid leiten können. Zu erkennen sind hier der Einrastbereich 20 mit dem Federelement 21 und der Aufnahmebereich 26 der Dosenöffnung 3. Die korrespondierenden Komponenten bilden die Nut 28 und der Dichtbereich 23 mit dem Dichtelement 24 am Steckelement 6. Der erste Innendurchmesser 22 ist derart eingerichtet, dass das Verschlusselement 1 mit dem ersten Außendurchmesser 11 hindurchgeführt werden kann, ohne mit dem Federelement 21 in Kontakt zu kommen. In seiner Kappeneigenschaft innenseitig weist das Verschlusselement 1 einen zweiten Innendurchmesser 27 auf, der größer als der maximale Außendurchmesser 25 des Dichtelements 24 des Steckelements 1 ist.

Mit dem hier vorgeschlagenen Verschlusselement ist es möglich, sowohl eine Dosenöffnung als auch ein Steckelement (gleichzeitig) abzudichten, ohne dabei selbst beschädigt zu werden beziehungsweise das Steckelement oder die Dosenöffnung zu beschädigen. Zugleich ist das Verschlusselement universell einsetzbar und schützt die Dosenöffnung beziehungsweise das Steckelement vor Verschmutzen.

### Bezugszeichenliste

- 1: Verschlusselement
- 2: Außenfläche
- 3: Dosenöffnung
- 4: Innenfläche
- 5: Aufnahmeöffnung
- 6: Steckelement
- 7: Dichtlippe
- 8: Erster Außenabschnitt
- 9: Zweiter Außenabschnitt
- 10: Dritter Außenabschnitt
- 11: Erster Außendurchmesser
- 12: Zweiter Außendurchmesser
- 13: Erste Kontaktfläche
- 14: Zweite Kontaktfläche
- 15: Zapfen
- 16: Leitungsöffnung
- 17: Randabschnitt
- 18: Aufgenommener Bereich
- 19: Hydraulisches Anschlusssystem
- 20: Einrastbereich
- 21: Federelement
- 22: Erster Innendurchmesser
- 23: Dichtbereich
- 24: Dichtelement
- 25: Maximaler Außendurchmesser
- 26: Aufnahmebereich
- 27: Zweiter Innendurchmesser
- 28: Nut
- 29: Verschlussstopfen
- 30: Verschlusskappe
- 31: Reservoir

## Patentansprüche

1. Verschlusselement (1) für ein hydraulisches Anschlusssystem (19), wobei das Verschlusselement (1) eine Außenfläche (2) und einen Innenfläche (4) aufweist und wobei das Verschlusselement (1) sowohl außenseitig als Stopfen für eine Dosenöffnung (3) verwendbar ist als auch innenseitig als Kappe mit einer Aufnahmeöffnung (5) für ein Steckelement (6) verwendbar ist, wobei das Steckelement (6) mit der Dosenöffnung (3) hydraulisch leitend verbindbar ist, und wobei eine Dosenöffnung (3) mittels einer Dichtlippe (7) abdichtbar ist, wobei die Dichtlippe (7) in einem ersten Außenabschnitt (8) der Außenfläche (2) angeordnet ist und relativ zum ersten Außenabschnitt (8) unter einem Winkel weg gerichtet ist, **dadurch gekennzeichnet, dass** die Außenfläche (2) einen sich an den ersten Außenabschnitt (8) anschließenden konzentrischen dritten Außenabschnitt (10) aufweist, wobei der erste Außenabschnitt (8) sich zum dritten Außenabschnitt (10) hin erweitert und die Dichtlippe (7) sich in Verlängerung des dritten Außenabschnitts (10) zum ersten Außenabschnitt (8) hin konzentrisch, insbesondere parallel, erstreckt.

2. Verschlusselement (1) nach Anspruch 1, wobei das Verschlusselement (1) einen zweiten Außenabschnitt (9) aufweist, mit welchem die Dosenöffnung (3) gegen Verschmutzen schützbar ist, und der zweite Außenabschnitt (9) bevorzugt konzentrisch radial nach außen versetzt ist und über die Außenfläche (2) anlegbar ist.

3. Verschlusselement (1) nach Anspruch 2, wobei die Dichtlippe (7) einen ersten Außendurchmesser (11) und der zweite Außenabschnitt (9) einen zweiten Außendurchmesser (12) aufweist, wobei der erste Außendurchmesser (11) kleiner als der zweite Außendurchmesser (12) ist.

4. Verschlusselement (1) nach einem der vorhergehenden Ansprüche, wobei das Verschlusselement (1) einen konzentrischen Zapfen (15) ausbildet, welcher in eine Leitungsöffnung (16) eines Steckelements (6) derart einsteckbar ist, dass diese abgedichtet ist.

5. Verschlusselement (1) nach einem der vorhergehenden Ansprüche, wobei das Verschlusselement (1) an der Aufnahmeöffnung (6) einen Randabschnitt (17) ausbildet, mit welchem ein aufgenommener Bereich (18) eines Steckelements (6) gegen Verschmutzen schützbar ist, wobei der Randabschnitt (17) derart eingerichtet ist, dass der Randabschnitt (17) sich zur Aufnahmeöffnung (5) hin radial nach außen erweitert und über die Innenfläche (4) an dem Steckelement (6) anlegbar ist.

6. Verschlusselement (1) nach Anspruch 4 oder 5, wobei die Innenfläche (4) allein mit dem Randabschnitt (17) und/oder dem Zapfen (15) eine Kontaktfläche (13, 14) für ein Steckelement (6) bildet, und insbesondere die übrige Innenfläche (4) bei einem Aufschieben zu keinem Zeitpunkt Kontakt mit dem Steckelement (6) hat.

7. Verschlusselement (1) nach Anspruch 4, wobei das Verschlusselement (1) allein über die Dichtlippe (7) bzw. den Zapfen (15) in einer Dosenöffnung (3) bzw. auf einem Steckelement (6) positionierbar ist.

8. Hydraulisches Anschlusssystem (19) zum leitenden Verbinden für ein Fluid, aufweisend eine Dosenöffnung (3) und ein leitend verbindbares Steckelement (6), mit einem Verschlusselement (1) nach einem vorhergehenden Ansprüche zum Dichten der Dosenöffnung (3) und/oder des Steckelements (6), wenn die Dosenöffnung (3) bzw. das Steckelement (6) nicht miteinander leitend verbunden sind.

9. Hydraulisches Anschlusssystem (19) nach Anspruch 8, wobei die Dosenöffnung (3) einen Einrastbereich (20) mit einem Federelement (21) mit einem minimalen Innendurchmesser (22) aufweist, wobei der Außendurchmesser (11) der Dichtlippe (7) kleiner ist als der erste Innendurchmesser (22) des Federelements (21), und wobei insbesondere das Steckelement (6) einen Dichtbereich (23) mit einem Dichtelement (24) mit einem maximalen Außendurchmesser (25) aufweist und im Verschlusselement (1) innenseitig ein Aufnahmebereich (26) mit einem zweiten Innendurchmesser (27) für das Steckelement (6) vorgesehen ist, wobei der zweite Innendurchmesser (27) größer als der maximale Außendurchmesser (25) des Dichtelements (24) ist.

## Claims

1. Closure element (1) for a hydraulic connector system (19), the closure element (1) having an outer face (2) and an inner face (4), and it being possible for the closure element (1) to be used both on the outer side as a plug for a socket opening (3) and on the inner side as a cap with a receiving opening (5) for a plug element (6), it being possible for the plug element (6) to be connected to the socket opening (3) in a hydraulically conducting manner, and it being possible for a socket opening (3) to be sealed by means of a sealing lip (7), the sealing lip (7) being arranged in a first outer section (8) of the outer face (2) and being directed away at an angle relative to the first outer section (8), **characterized in that** the outer face (2) has a concentric third outer section (10) which adjoins the first outer section (8), the first outer section (8) widening towards the third outer section (10), and the sealing lip (7) extending concentrically, in particular parallel, with respect to the first outer section (8) in an extension of the third outer section (10).

2. Closure element (1) according to Claim 1, the closure element (1) having a second outer section (9), by way of which the socket opening (3) can be protected against contamination, and the second outer section (9) preferably being offset radially to the outside in a concentric manner and being capable of contact via the outer face (2).

3. Closure element (1) according to Claim 2, the sealing lip (7) having a first external diameter (11), and the second outer section (9) having a second external diameter (12), the first external diameter (11) being smaller than the second external diameter (12).

4. Closure element (1) according to one of the preceding claims, the closure element (1) forming a concentric pin (15) which can be plugged into a line opening (16) of a plug element (6) in such a way that it is sealed.

5. Closure element (1) according to one of the preceding claims, the closure element (1) forming an edge section (17) on the receiving opening (6), by way of which edge section (17) a received region (18) of a plug element (6) can be protected against contamination, the edge section (17) being set up in such a way that the edge section (17) widens radially to the outside towards the receiving opening (5) and can bear against the plug element (6) via the inner face (4).

6. Closure element (1) according to Claim 4 or 5, the inner face (4) forming a contact face (13, 14) for a plug element (6) solely by way of the edge section (17) and/or the pin (15), and the remaining inner face (4), in particular, being in contact with the plug element (6) at no time when pushed on.

7. Closure element (1) according to Claim 4, it being possible for the closure element (1) to be positioned in a socket opening (3) or on a plug element (6) solely via the sealing lip (7) or the pin (15).

8. Hydraulic connector system (19) for connecting in a conducting manner for a fluid, having a socket opening (3) and a plug element (6) which can be connected in a conducting manner, having a closure element (1) according to one of the preceding claims for sealing the socket opening (3) and/or the plug element (6) when the socket opening (3) and/or the plug element (6) are/is not connected to one another in a conducting manner.

9. Hydraulic connector system (19) according to Claim 8, the socket opening (3) having a latching region (20) with a spring element (21) with a minimum internal diameter (22), the external diameter (11) of the sealing lip (7) being smaller than the first internal diameter (22) of the spring element (21), and, in particular, the plug element (6) having a sealing region (23) with a sealing element (24) with a maximum external diameter (25), and a receiving region (26) with a second internal diameter (27) for the plug element (6) being provided on the inner side in the closure element (1), the second internal diameter (27) being greater than the maximum external diameter (25) of the sealing element (24).

## Revendications

1. Elément de fermeture (1) destiné à un système de raccordement hydraulique (19), l'élément de fermeture (1) ayant une surface extérieure (2) et une surface intérieure (4) et l'élément de fermeture (1) pouvant être utilisé aussi bien côté extérieur comme un bouchon destiné à une ouverture de boîte (3) que côté intérieur comme capuchon muni d'une ouverture de réception (5) destinée à un élément enfichable (6), l'élément enfichable (6) pouvant être relié hydrauliquement de manière conductrice à l'ouverture de boîte (3), et une ouverture de boîte (3) pouvant être rendue étanche au moyen d'une lèvre d'étanchéité (7), la lèvre d'étanchéité (7) étant disposée dans une première partie extérieure (8) de la surface extérieure (2) et étant dirigée à l'opposé de la première partie extérieure (8) en formant un angle, **caractérisé en ce que** la surface extérieure (2) comporte une troisième partie extérieure concentrique (10) se raccordant à la première partie extérieure (8), la première partie extérieure (8) s'élargissant en direction de la troisième partie extérieure (10) et la lèvre d'étanchéité (7) s'étendant concentriquement, notamment parallèlement, en direction de la première partie extérieure (8) dans le prolongement de la troisième partie extérieure (10).

2. Elément de fermeture (1) selon la revendication 1, l'élément de fermeture (1) comportant une deuxième partie extérieure (9) avec laquelle l'ouverture de boîte (3) peut être protégée contre les salissures, et la deuxième partie extérieure (9) étant décalée de préférence concentriquement radialement vers l'extérieur et pouvant être placée par-dessus la surface extérieure (2).

3. Elément de fermeture (1) selon la revendication 2, la lèvre d'étanchéité (7) ayant un premier diamètre extérieur (11) et la deuxième partie extérieure (9) ayant un deuxième diamètre extérieur (12), le premier diamètre extérieur (11) étant inférieur au deuxième diamètre extérieur (12).

4. Elément de fermeture (1) selon l'une des revendications précédentes, l'élément de fermeture (1) formant une broche concentrique (15) qui peut être insérée dans une ouverture de conduit (16) d'un élément enfichable (6) de manière à rendre celle-ci étanche.

5. Elément de fermeture (1) selon l'une des revendications précédentes, l'élément de fermeture (1) formant au niveau de l'ouverture de réception (6) une partie de bord (17) avec laquelle une région reçue (18) d'un élément enfichable (6) peut être protégée contre les salissures, la partie de bord (17) étant conçue de telle sorte que la partie de bord (17) s'élargit radialement vers l'extérieur en direction de l'ouverture de réception (5) et peut être appliquée par-dessus la surface intérieure (4) au niveau de l'élément enfichable (6).

6. Elément de fermeture (1) selon la revendication 4 ou 5, la surface intérieure (4) seule formant avec la partie de bord (17) et/ou la broche (15) une surface de contact (13, 14) destinée à un élément enfichable (6), et en particulier le reste de la surface intérieure (4) n'étant à aucun moment en contact avec l'élément enfichable (6) lors du coulissement.

7. Elément de fermeture (1) selon la revendication 4, l'élément de fermeture (1) seul pouvant être positionné, par le biais de la lèvre d'étanchéité (7) et de la broche (15), dans une ouverture de boîte (3) ou sur un élément enfichable (6).

8. Système de raccordement hydraulique (19), destiné à la connexion conductrice pour un fluide, comprenant une ouverture de boîte (3) et un élément enfichable (6) pouvant être connecté de manière conductrice, comprenant un élément de fermeture (1) selon l'une des revendications précédentes étant prévu pour rendre étanche l'ouverture de boîte (3) et/ou l'élément enfichable (6) lorsque l'ouverture de boîte (3) et l'élément enfichable (6) ne sont pas connectés de manière conductrice l'un avec l'autre.

9. Système de raccordement hydraulique (19) selon la revendication 8, l'ouverture de boîte (3) comportant une zone d'encliquetage (20) munie d'un élément à ressort (21) ayant un diamètre intérieur minimal (22), le diamètre extérieur (11) de la lèvre d'étanchéité (7) étant inférieur au premier diamètre intérieur (22) de l'élément à ressort (21), et notamment l'élément enfichable (6) comportant une zone d'étanchéité (23) munie d'un élément d'étanchéité (24) ayant un diamètre extérieur maximal (25) et une zone de réception (26), ayant un deuxième diamètre intérieur (27), destinée à l'élément enfichable(6), étant prévue du côté intérieur dans l'élément de fermeture (1), le deuxième diamètre intérieur (27) étant supérieur au diamètre extérieur maximal (25) de l'élément d'étanchéité (24).
